# FASCICULE DE BREVET EUROPEEN

(11) **EP 0 392 934 B1**
(45) Date de publication et mention de la délivrance du brevet: **21.09.1994**
(21) Numéro de dépôt: 90401038.6
(22) Date de dépôt: 17.04.1990
(51) Int. Cl.: A01N 49/00

(54) **Raticide**
Mittel gegen Ratten
Raticide

(30) Priorité: 14.04.1989 FR 8905014
(43) Date de publication de la demande: 17.10.1990
(73) Titulaire: NIGIKO S.A., F-69008 Lyon (FR)
(72) Inventeur: Comar, Gilles, F-92380 Garches (FR); Comar, Nicolas, F-92420 Vaucresson (FR)
(74) Mandataire: Phélip, Bruno

(56) Documents cités:
- FR-A- 2 265 273
- GB-A- 2 117 242
- LU-A- 81 407
- M. WINDHOLZ et al.: "The Merck Index", édition 10, 1983, page 123, no. 863,Merck & Co., Inc., Rahway, NJ, US

## Description

La présente invention concerne le domaine de la lutte contre les animaux nuisibles et a plus particulièrement pour objet une composition raticide efficace pour la destruction de rongeurs, tels que les rats, et un procédé pour l'obtention d'une telle composition.

On sait que les compositions toxiques de ce genre comprennent essentiellement un principe actif mélangé à un support alimentaire, de telle manière qu'après ingestion par l'animal, celui-ci soit détruit au moins à terme. Ce mélange appétent peut lui-même être combiné à diverses matières inertes. Ainsi, les appâts se présentent généralement sous forme de poudres, telles que des mélanges de farines, de céréales, de compositions particulaires en granulés, comprimés ou autres, d'aliments composés agglomérés, de céréales préimprégnées. Fréquemment le mélange appétent contient une ou plusieurs matières choisies parmi les farines de céréales, les farines de viandes, les déchets de meunerie, les farines de poisson, les céréales, les céréales broyées ou concassées, les huiles d'origine végétale ou animale, des glucides, protéines, poudres de lait et autres. Les matières inertes, lorsqu'elles sont présentes, sont souvent le talc ou le kaolin. La composition peut également contenir divers autres additifs, tels que colorants, agents conservateurs, des anti-oxydants ou autres.

De nombreux principes actifs toxiques peuvent être mis en oeuvre dans les compositions rodonticides et, parmi eux, on peut citer les vitamines D, tels que le calciférol ou le colécalciférol. Ces dénominations communes internationales sont bien connues et sont largement utilisées dans la technique.

Les informations qui précèdent n'ont été données qu'à titre purement indicatif pour illustrer l'état de la technique dans un domaine bien accessible à l'homme du métier.

On se préoccupe de trouver des principes actifs ou des mélanges de principes actifs de plus en plus efficaces et présentant moins de toxicité vis à vis de l'homme et des animaux domestiques.

La présente invention a pour objet une composition raticide, dont l'agent actif comprend une association synergique, les constituants utilisés dans les mêmes proportions, permettent d'obtenir par leur association, des résultats de destruction très supérieurs à ceux obtenus avec les constituants utilisés individuellement, ladite association permettant ainsi de réduire notablement la survie des animaux qui en ont absorbé.

L'invention a donc pour objet une composition raticide comprenant l'association d'au moins une vitamine D et d'une quantité synergique d'acide acétyl salicylique ou de leurs dérivés et sels.

Parmi les vitamines D, on donne la préférence selon l'invention à la vitamine D₃. De tels composés ou dérivés sont déjà connus en tant que principes actifs rodonticides, notamment ceux énumérés précédemment, à savoir calciférol ou le colécalciférol.

Selon l'invention, la vitamine D est associée avec une quantité synergique d'acide acétyl salicylique. Comme on le sait, cette composition peut être mis en oeuvre en tant que tel ou bien sous forme d'un sel.

La composition raticide destinée à l'utilisation comprend l'association synergique définie précédemment, en mélange avec un support alimentaire classique en poudre ou en grains, ou selon toutes formes physiques convenables. Lorsqu'il s'agit plus particulièrement d'une composition raticide, ce support peut consister en des grains de céréale, par exemple de blé ou d'avoine, qui sont imprégnés ou laqués de la préparation active. Les quantités de l'association à mettre en oeuvre dans la composition rodonticide finale n'ont pas besoin d'être élevées et sont le plus généralement inférieures à 1% par rapport au poids total de la composition, des quantités inférieures à 0,5% en poids étant le plus souvent suffisantes.

Au sein de l'association synergique, les proportions relatives de la vitamine D et d'acide acétyl salicylique peuvent varier, et on a constaté que pour une quantité donnée de vitamine D, il convenait d'utiliser une quantité synergique d'acide acétyl salicilyque, car les effets bénéfiques de la présence de ce dernier composé se manifestent lorsque cette quantité dépasse, en proportion, celle de la vitamine D. Ceci a été constaté dans les essais réalisés selon l'invention avec des supports alimentaires consistant en des grains de céréales. L'effet de synergie étant déjà très marqué à partir de telles doses, il n'est pas nécessaire d'utiliser des quantités d'acide acétyl salicylique plus élevées, bien que cela soit toujours possible sans pour autant entraîner d'effet indésirable.

De manière préférentielle la composition raticide selon l'invention comprend de la vitamine D et de l'acide acétyl salicylique dans un rapport acide acétyl salicylique: vitamine D compris entre 1 et 10 en poids et en particulier entre 3 et 6 en poids.

La présente invention a d'autre part pour objet un procédé d'obtention de la composition précédemment décrite comprenant la formation d'un mélange de vitamine D et l'acide acétyl salicylique, ou de leurs dérivés, le rapport acide acétyl salicylique: vitamine D étant compris de préférence entre 1 et 10 et en particulier entre 3 et 6, et l'addition d'un support alimentaire en quantité nécessaire. Le support alimentaire est ajouté de manière à ce que la proportion du mélange de vitamine D et de l'acide acétyl salicylique par rapport au poids total de la composition soit inférieur à 1% et de préférence inférieur à 0,5 % en poids.

On a illustré les résultats avantageux de l'invention par une étude expérimentale de la toxicité d'un raticide comprenant une association de vitamine D₃(colécalciférol) et d'acide acétylsalicylique. Dans les essais, le support alimentaire consistait en des grains de blé. La formulation était la même dans tous les cas, à l'exception de la dose d'acide acétyl salicylique qui a varié. la composition contenait aussi des additifs usuels par exemple des anti-oxydants, tels que le butylhydroxytoluène (BHT) et un colorant.

Les essais ont été réalisés respectivement avec l'acide acétyl salicylique (AAS) seul, la vitamine D₃ seule et l'association vitamine D₃ + AAS. Les rats ont été répartis par groupes de 7. Chaque groupe disposait d'appâts dans des mangeoires contenant environ 1000 g d'appât. Les appâts ont été renouvelés chaque jour et la consommation estimée par pesée.

Dans le cas d'un produit contenant l'AAS seul, les rats ont consommé entre 150 et 180 g d'appât par jour pendant quinze jours sans aucun signe de toxicité.

Dans le groupe ayant consommé l'appât dosé à 0,075% en poids de vitamine D₃ seule, on a constaté 100% de mortalité 13 jours après le début de la consommation.

On a par ailleurs effectué une première série d'expériences sur un groupe de rats ayant consommé un appât contenant, à titre de principe actif, une association de vitamine D₃ à raison de 0,075% en poids par rapport au poids de la composition totale et 0,15% en poids d'acide acétylsalicylique par rapport au poids de la composition totale. On a constaté sur ce groupe que la survie totale des rats était analogue à celle du lot ayant consommé la vitamine D₃ seule. Elle se situe entre le treizième jour et le quatorzième jour après le début de la consomation. Toutefois, la mortalité dans le lot ayant consommé cette association vitamine D₃ + AAS se manifeste 36 heures avant celle du groupe ayant consommé l'appât à base de vitamine D₃ seule.

Une autre expérience a été réalisée avec un appât contenant, toujours sur un support à base de grains de céréale (blé), l'association de 0,075% de vitamine D₃ et de 0,30% de AAS. La quantité d'appât consommée est identique dans les groupes à savoir 140 g à 150g par jour et par rat. Les rats ont consommé le blé pendant les deux premiers jours uniquement. On a constaté dans le groupe vitamine D₃ + AAS à 0,30%, un taux de mortalité de 100% le septième jour. Ainsi, l'association d'acide acétylsalicylique à raison de 0,30% en poids de la composition totale avec la vitamine D₃ à raison de 0,075% en poids de la composition totale permet d'obtenir 100% de mortalité 7 jours après la prise d'appât au lieu de 13 jours. La durée de la survie est donc divisée par deux. Les cadavres ont été laissés à l'air libre pendant 15 jours sans donner naissance à une odeur particulière quelconque.

Les résultats obtenus ci-dessus montrent clairement l'effet avantageux de l'utilisation dans une formulation rodonticide de l'association d'une vitamine D et d'une quantité synergique d'acide acétylsalicylique.

L'homme du métier peut adapter les quantités à mettre en oeuvre des constituants respectifs de l'association, selon la nature de ceux-ci (vitamine D) ainsi que selon la nature du support alimentaire. Les proportions relatives des constituants au sein de l'association synergique, de même que leur dosage au sein de la composition raticide finale sont à la portée de l'homme du métier qui, par des expériences de routine, peut déterminer les quantités optimales à mettre en oeuvre.

## Revendications

1. Composition raticide comprenant l'association d'au moins une vitamine D et d'une quantité synergique d'acide acétyl salicylique ou de leurs dérivés et sels.

2. Composition selon la revendication 1, caractérisée en ce que la vitamine D est le calciférol (D2) ou le colécalciférol (D3).

3. Composition selon l'une quelconque des revendications 1 ou 2, caractérisée en ce que la vitamine D est la vitamine D3.

4. Composition selon l'une quelconque des revendications 1 à 3, caractérisée en ce qu'elle comprend:
a) de la vitamine D et de l'acide acétyl salicylique ou de leurs dérivés dans un rapport acide acétyl salicylique: vitamine D compris préférentiellement entre 1 et 10 en poids et en particulier compris entre 3 et 6 en poids,
b) un support alimentaire en quantité nécessaire.

5. Composition selon l'une quelconque des revendications 1 à 4, caractérisée en ce que le support alimentaire est sous la forme de poudre, de grains ou sous toute autre forme physique convenable connue, la proportion de l'association dans la composition rodenticice finale étant en général inférieure à 1 % par rapport au poids total du produit, et de préférence inférieure à 0,5% en poids.

6. Procédé d'obtention d'une composition raticide caractérisé par le fait qu'elle comprend la formation d'un mélange de vitamine D et l'acide acétyl salicylique , ou de leurs dérivés, le rapport acide acétyl salicylique : vitamine D étant compris de préférence entre 1 et 10 et en particulier entre 3 et 6 , et l'addition d'un support alimentaire en quantité nécessaire.

7. Procédé selon la revendication 6, caractérisé en ce que le support alimentaire est ajouté de manière à ce que la proportion du mélange de vitamine D et de l'acide acétyl salicylique par rapport au poids total de la composition soit inférieur à 1% et de préférence inférieur à 0,5 % en poids.

8. Procédé selon l'une des revendications 6 et 7, caractérisé en ce que la vitamine D est le calciférol (D2) ou le colécalciférol (D3).

## Claims

1. Rat killing composition comprising in combination at least a D vitamin and a synergic amount of acetyl-salicylic acid or derivatives or salts thereof.

2. Composition according to claim 1, characterized in that D vitamin is calciferol (D₂) or colecalciferol (D₃).

3. Composition according to any one of claims 1 or 2, characterized in that D vitamin is D₃ vitamin.

4. Composition according to any one of claims 1 to 3, characterized in that it comprises :
a) D vitamin or acetyl-salicylic acid or derivatives thereof in a ratio in weight acetyl-salicylic acid : D vitamin preferably between 1 and 10 and more preferably between 3 and 6,
b) a food substrate according to the necessary amount.

5. Composition according to any one of claims 1 to 4, characterized in that the food substrate is a powder, granulates or any known physical suitable composition, the proportion of the combination in the final rat killing composition being generally less than 1% by weight of the whole weight of the product and preferably less than 0.5% in weight.

6. Method of making a rat killing composition, characterized in that it is provided to make a mixture of D vitamin and acetyl salicylic acid or derivatives thereof, the ratio acetyl salicylic acid : D vitamin being preferably between 1 and 10 more preferably between 3 and 6 and to add a food substrate according to the necessary amount.

7. Method according to claim 6, characterized in that the food substrate is added such as the quantity of D vitamin and acetyl salicylic acid mixture is less than 1% and preferably less than 0.5% by weight of the whole weight of the composition.

8. Method according to one of claims 6 and 7, characterized in that D vitamin is calciferol (D₂) or colecalciferol (D₃).

## Patentansprüche

1. Zusammensetzung gegen Ratten, umfassend die Assoziation wenigstens eines D-Vitamins mit einer synergistischen Menge Acetylsalicylsäure oder deren Derivate und Salze.

2. Zusammensetzung gemäß Anspruch 1, dadurch gekennzeichnet, daß es sich bei dem Vitamin D um Calciferol (D₂) oder Cholecalciferol (D₃) handelt.

3. Zusammensetzung gemäß einem der Ansprüche 1 oder 2, dadurch gekennzeichnet, daß es sich bei dem Vitamin D um Vitamin D₃ handelt.

4. Zusammensetzung gemäß einem der Ansprüche 1 bis 3, dadurch gekennzeichnet, daß sie umfaßt:
a) Vitamin D und Acetylsalicylsäure oder deren Derivate in einem Gewichtsverhältnis Acetylsalicylsäure:Vitamin D vorzugsweise zwischen 1 und 10 und insbesondere zwischen 3 und 6.
b) einen futterartigen Träger in ausreichender Menge.

5. Zusammensetzung gemäß einem der Ansprüche 1 bis 4, dadurch gekennzeichnet, daß der futterartige Träger in Form eines Pulvers, von Körnern oder in jeder anderen bekannten brauchbaren physischen Form vorliegt, wobei der Anteil der Assoziation in der endgültigen Zusammensetzung gegen Ratten im allgemeinen unter 1% in bezug auf das Gesamtgewicht des Produkts und vorzugsweise unter 0,5 Gew.-% liegt.

6. Verfahren zur Gewinnung einer Zusammensetzung gegen Ratten, dadurch gekennzeichnet, daß sie die Bildung eines Gemischs aus Vitamin D und Acetylsalicylsäure oder deren Derivaten, wobei das Verhältnis Acetylsalicylsäure Vitamin D vorzugsweise zwischen 1 und 10 und insbesondere zwischen 3 und 6 liegt, sowie die Zugabe eines futterartigen Trägers in ausreichender Menge umfaßt.

7. Verfahren gemäß Anspruch 6, dadurch gekennzeichnet, daß der futterartige Träger so zugegeben wird, daß das Verhältnis des Gemischs aus Vitamin D und Acetylsalicylsäure zum Gesamtgewicht der Zusammensetzung unter 1 Gew.-% und vorzugsweise unter 0,5 Gew.-% liegt.

8. Verfahren gemäß einem der Ansprüche 6 und 7, dadurch gekennzeichnet, daß es sich bei dem Vitamin D um Calciferol (D₂) oder Cholecalciferol (D₃) handelt.
